# EUROPEAN PATENT SPECIFICATION

(11) **EP 1 280 120 B1**
(45) Date of publication and mention of the grant of the patent: **24.09.2003**
(21) Application number: 01830502.9
(22) Date of filing: 27.07.2001
(51) Int. Cl.: G08G 1/127, G08B 25/10, G08B 25/12

(54) **Emergency location and warning device and method for means of transport**
Vorrichtung und Verfahren zur Notfalls-Lokalisierung und Warnung für ein Verkehrsmittel
Dispositif et procédé pour localiser un cas d'urgence et pour avertir pour un moyen de transport

(43) Date of publication of application: 29.01.2003
(73) Proprietor: Riviera Trasporti S.p.A., 18100 Imperia (IT)
(72) Inventor: Carnevali, Cristina, 16132 Genova (IT); Conti, Carlo, c/o Riviera Trasporti S.p.A., 18100 Imperia (IT); Genova, Riccardo, 16125 Genova (IT); Mazzucchelli, Maurizio, c/o DIE, 16145 Genova (IT); Sasso, Alessandro, 16166 Genova (IT)
(74) Representative: Maggioni, Claudio

(56) References cited:
- EP-A- 0 737 953
- EP-A- 0 748 727
- EP-A- 1 039 428
- WO-A-01/32480
- US-A- 5 686 910
- US-A- 5 726 636
- US-A- 5 808 564
- US-A- 6 028 537

## Description

The present invention relates to an emergency location and warning system for vehicles, and particularly for public service means of transport.

In the present context, the term "public service means of transport" denotes vehicles of any type, for example coaches, ferries, aircraft, trains and the like, intended to operate in a specific territory and to transport individual persons or groups of persons.

Since a vehicle of this type is, to all intents and purposes, a public place, in which persons unknown to each other will inevitably be present, there is a strong desire for safety. This desire for safety is further increased by the fact that this is a public place which is enclosed and moving, with a position which is not fixed, and in which the possibilities of escaping, or in any case moving away from, any hazard are comparatively limited.

Consequently there is a requirement for safety means or systems on board such transport vehicles, and particularly those in public service, which enable a warning to be given of an emergency and which ensure that assistance is provided rapidly.

There are known automatic safety systems for motor vehicles, which react, for example, to high acceleration in case of impact during an accident. Patent application WO 99/31575 describes an emergency warning system for motor vehicles involved in road accidents or acts of vandalism, in which an acceleration sensor detects the occurrence of an accident. A receiver of the satellite global positioning system (GPS) determines the geographical position of the motor vehicle. The said geographical position is transmitted together with information relating to various technical parameters of the vehicle, by direct satellite transmission or satellite telephone, to a base station which supports the said safety system. The base station receives the data directly via satellite or by telephone and, in a subsequent stage, can warn the corresponding local emergency service.

There are also known automatic devices for sending prerecorded telephone messages from fixed points, for example shops or banks, to predetermined recipients, for example the police, in case of predetermined events, such as robbery or theft.

There are also numerous public vehicles, for example trains, which are provided with telephones which enable an emergency call to be made directly.

However, the aforesaid prior art safety systems have certain problems and drawbacks, related mainly to their technical and procedural methods, which, in the presence of a criminal act and immediate danger to the life and health of passengers, make it difficult, if not totally impossible, for the police to intervene rapidly.

The systems based on the presence of an operation control centre for receiving and evaluating data transmitted from the vehicle have serious delays, related to the conversion of the data format received from the vehicle into information usable by the operators of the public emergency services. This data conversion also includes the identification of geographic positions on a road or railway map or on a nautical chart. The request for further information by the operators of the public emergency services has to be sent again, if technically possible, from the control centre to the vehicle, and the corresponding answer from the vehicle has to pass once again through the operation control centre.

Sending prerecorded messages to the police is a low-flexibility solution, limited to predetermined events and fixed locations.

In the case of public transport, the telephones present in the vehicles are usually located in places accessible only by the authorized personnel of the corresponding vehicle, for example a railway carriage, and not by any passenger who feels the need to make an emergency call without preliminary warning to the vehicle personnel.

All the prior art emergency warning systems for vehicles have in common the drawback that they do not enable the position of the vehicle to be detected and communicated directly to the police and to the emergency services, and do not comply with the communication protocols recognized by these services.

Using radio systems for transmitting data from the vehicle to an operation control centre of the operator of a safety system has the disadvantage that the said radio systems are not always able to ensure a wide coverage of the territory concerned, and that any malfunction requires the intervention of the radio link owner, which will not necessarily be provided when needed.

Because of the guaranteed high reliability of the public networks, safety systems based on mobile telephone data transmission do not entail maintenance problems, but are still restricted to the territorial coverage provided by the individual telephone service operator.
From EP 0 737 953 is known a vehicular emergency message system with a position locator for determining the position of the vehicle and providing longitude and latitude of the vehicle position. The device further comprises a cellular transceiver with an audio input, an audio output and a control input, as well as a controller coupled to the cellular transceiver and the position locator. The system is activated by an activation unit coupled to the controller and operates in two activation modes. According to the first mode, the system transmits the latitude and longitude position of the vehicle in form of ASCII blocks to an automated data receiver via modem prior to connect the user with a human operator.
In the second mode the system bypasses said automated data receiver and connects directly to the human operator. In this case, a message centre on board the vehicle displays a data string including a user identification number and the vehicle position in latitude and longitude, and the user of the vehicle himself is required to read this information over the cellular communication channel.

It has therefore been considered necessary to provide an emergency location and warning system for means of transport which rapidly provides the police with all necessary information for rapid intervention, and which is adapted flexibly to different emergency situations.

The object of the present invention is therefore to devise an emergency location and warning device and method for means of transport which can meet the aforesaid requirements while simultaneously overcoming the drawbacks mentioned with reference to the prior art.

The object described above is achieved by means of a device according to Claim 1 and a method according to Claim 27.

To enable the invention to be understood more fully, a description of a non-restrictive example of embodiment of the invention is given below, illustrated by the attached drawings, in which:

Figure 1 shows a block diagram of the hardware components with the corresponding connections, and the interaction of the system with the outside;

Figure 2 shows schematically the four operating modes of the device according to the invention;

Figure 3 is a flow chart which illustrates the main program which controls the operation of the device according to the invention.

Figures 4 to 12 are flow charts which illustrate, by way of example and without restriction, possible sequences of the data processing and command steps during the operation of the device according to the invention;

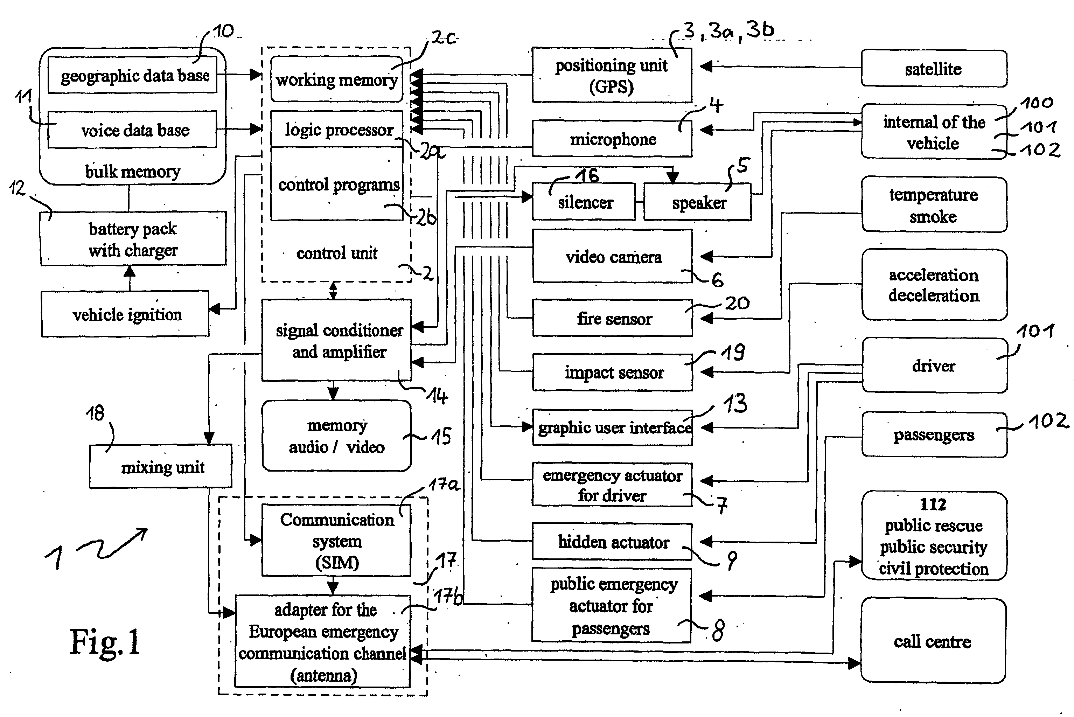

With reference to Figure 1, the emergency location and warning device for means of transport is indicated in a general way by the number 1. The said device 1, being associated with a vehicle 100 with a driver's compartment 101 and a passenger compartment 102, comprises a control unit 2, preferably a microcomputer 2. The said microcomputer 2 comprises a logic processor (CPU) 2a, a backing store 2b containing control programs, and a working memory 2c. The control unit 2 is mounted on board the vehicle 100 in a position protected from any external agents and from access by unauthorized persons.

A geographic location unit 3, preferably consisting of a receiver 3a with an antenna 3b of the satellite global positioning system (GPS), is mounted on the vehicle 100 and is electronically connected to the said control unit 2.

The device 1 also comprises one or more audio acquisition devices 4, preferably microphones 4, placed inside the vehicle 100 and capable of acquiring the audio environment both inside the driver compartment 101 and inside the passenger compartment 102.

One or more loudspeakers 5 and image acquisition units 6, preferably video cameras 6, are mounted inside the vehicle 100 in such a way that they can emit audio information into the passenger compartment 102 and driver's compartment 101, and can acquire the corresponding images from these.

There are also actuating devices for the emergency warning 7, 8 and 9, preferably push buttons and/or pedals, which are essentially divided into three groups.

The first group comprises a driver's emergency button 7, positioned visibly inside the driver's compartment 101 or in any case accessible by the driver of the means of transport 100 while he is driving.

The second group of actuator means comprises one or more public emergency buttons 8, positioned visibly inside the passenger compartment 102 or in any case accessible by the passengers of the means of transport 100 during the journey. Preferably, the public emergency button 8 is protected from accidental operation by suitable seals or housings, and is also indicated by a special colour or an identification symbol.

The third group of the said actuator means of the emergency warning comprises one or more hidden actuators 9, which can be operated by the driver or by any service personnel of the corresponding means of transport 100 in an essentially unobserved way. The specific position of the said hidden actuator 9 depends considerably on the type of vehicle 100 and on the distribution of the compartments and functions inside the vehicle.

The reference 10 indicates a geographic data base, associated with the control unit 2 and compatible with the format of the geographic data supplied by the geographic location unit 3. The said geographic data base 10 comprises an infrastructure map of the territory in which the vehicle 100 operates, and can compare data supplied by the receiver 3a of the positioning system 3, for example altitude, latitude and longitude, with corresponding internal data, and can supply a data string showing the position in the infrastructure, for example in the road, railway or nautical system, relative to the aforesaid geographical data.

In addition to the geographic data base 10, there is a voice data base 11, also connected to the control unit 2, which converts infrastructure data strings to digital audio data. The said data bases 10 and 11 can also be incorporated in a single digital program and can be made available in CD-ROM form or as a program which can be loaded into a backing store.

The device 1 is supplied by a battery pack 12 with a battery charger.

Inside the driver's compartment 101 there is also a user interface 13, consisting of an alphanumeric and graphic display system, which can be used to program the operating modes of the device 1 according to the invention and to enter the specifications relating to the operating territory of the vehicle 100, to the type of vehicle, and to the current protocols of the public emergency communication channel.

An amplifier 14 is also provided to condition, filter and amplify audio and video signals, together with an audio/video memory 15 and a muting unit 16 associated with the loudspeakers 5. This muting unit 16 preferably comprises an electrical logic card for muting and reactivating the said loudspeakers 5.

To permit communication with the outside, the device 1 also has a communication unit 17, consisting of an adapter for the public emergency channel 17b, for example a telephone antenna if the said public emergency channel is of the telephonic type, and a corresponding identification card 17a, for example a mobile telephone card.

To enable the amplitude of a first audio signal from one source, for example the microphones 4, to be lowered in favour of a second audio signal from another source, for example the voice data base 11, an audio signal mixing unit 18 is provided. The said mixing unit 18 can control digital and analogue audio signals.

It is also possible to provide further sensor means, for example impact sensors 19 and fire sensors 20 which can automatically detect accident situations involving the vehicle 100.

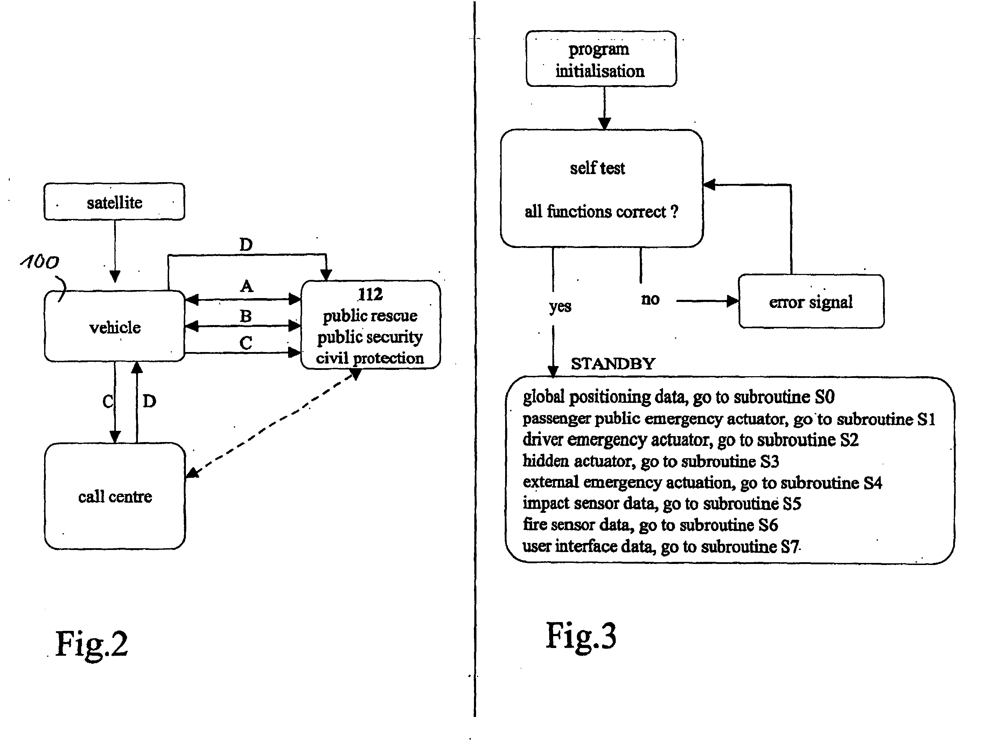

With reference to Figure 2, the four main operating modes of the emergency location and warning device for means of transport according to the invention are described below.

A first operating mode "A" consists of a normal emergency call, which can be made by the driver by means of the driver emergency button 7, in which a bidirectional telephone call is established between the vehicle 100 and the police. Information identifying the vehicle 100 and its current infrastructure-related position, obtained by means of the satellite positioning system 3 and the data bases 10 and 11, is transmitted by voice synthesis in parallel with the conversation between the driver and the police.

A second operating mode "B" consists of an emergency call which can be made by passengers by means of the public emergency button 8, in which a bidirectional telephone call is established between the interior of the vehicle 100 and the police. The said call is made between an on-board transceiver 4 and 5 in the proximity of the button 8 or by means of the microphones 4 and the loudspeakers 5. Information identifying the vehicle 100 and its current infrastructure-related position, obtained by means of the said satellite positioning system 3 and the data bases 10 and 11, is transmitted by voice synthesis simultaneously with the conversation between passengers and the police.

A third operating mode "C" consists of an emergency call which can be made in a concealed way by the driver or by the personnel of the corresponding means of transport 100 by using the hidden actuator 9, in which a unidirectional telephone call is established between the interior of the vehicle 100 and the police.

In a first stage, the on-board loudspeakers 5 are muted to conceal the telephone call in progress. After this a message, of the SMS type for example, is sent to any company operations centre of the operator of the vehicle 100 or to the operator of the device 1, or to any dedicated call centre. At the end, the emergency call is made to the police, and information identifying the vehicle 100 and its current infrastructure-related position, calculated by means of the satellite positioning system 3 and the data bases 10 and 11, is transmitted together with the audio environment inside the vehicle 100 in the course of this call.

A fourth operating mode "D" is very similar to the aforesaid second mode, and differs from it only in the fact that the actuation takes place in this case from outside the vehicle 100 by means of a specific secure message received by the on-board communication system 17. This fourth mode enables the emergency procedure to be additionally activated from outside the vehicle 100, for example in the case of theft or deviation of the vehicle.

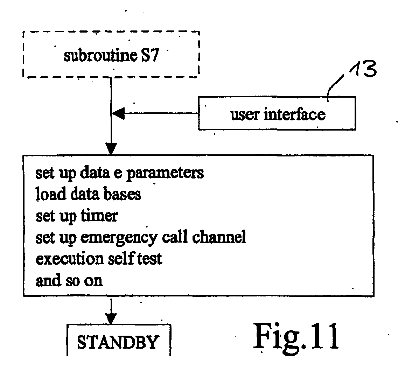

The operation of the device 1 according to the invention is described below with reference to Figures 3 to 12.

After the start-up and an initial test of the correct execution of all the functions, the device 1 remains live because of the battery pack 12 associated with it, independently of whether or not the engine of the vehicle 100 is running. The control unit 2 continuously executes the main cycle of the software control program, which, after each data processing operation and subroutine execution, returns to a condition (STANDBY) in which it waits for new incoming data or signals.

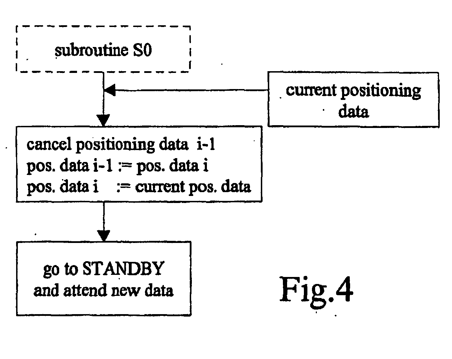

If the control unit 2 receives at its input data relating to the global position of the vehicle 100, arriving from the positioning unit 3, the said control unit 2 executes a subroutine S0, as shown schematically in Figure 4.

In a first step of the procedure, the positioning data relating to the penultimate position (i-1) are cancelled, and replaced by the data for the last position (i). The data for the last position are then replaced by the data for the current position. In case of emergency and failure of positioning, this procedure permits the current position of the vehicle 100 to be extrapolated on the basis of the time, the velocity of the vehicle and the preceding position data. After the geographic data have been updated, the program returns to the standby mode to await new incoming data.

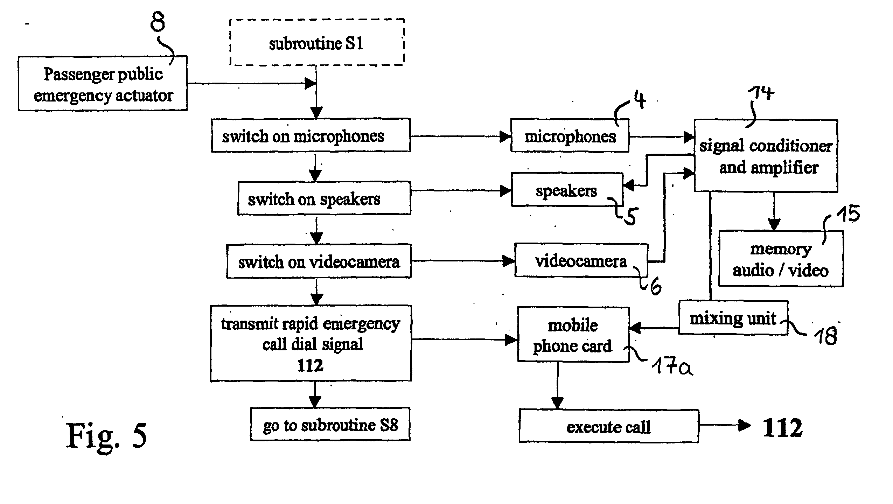

If the control unit 2 receives at its input a signal arriving from the public emergency button 8, the said control unit 2 executes a subroutine S1, as shown schematically in Figure 5.

The steps of the procedure are the turning on of the microphones 4, the loudspeakers 5, and the video cameras 6 inside the vehicle 100, and particularly inside the passenger compartment 102. After this, an emergency call signal, which in Europe is the telephone number 112 or other supported number, is generated and is sent by the control unit to the mobile telephone card 17a, which in turn establishes the telephone call to the police via the antenna 17b. While the control unit 2 executes a subroutine S8, as described below, the transmission of the acoustic signals from the microphones 4 to the police commences, together with the storage of the audio and video environment inside the vehicle 100 in the audio/video memory 15.

The subroutine S8 enables a synthesized voice, which communicates the identity of the vehicle 100 and its current infrastructure-related position, to be superimposed on the emergency call.

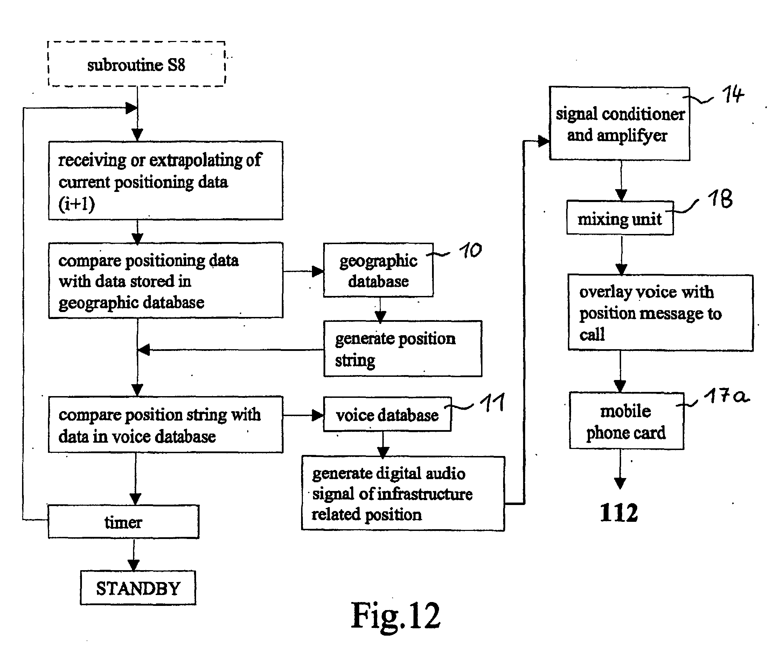

With reference to Figure 12, the control unit 2, in a first step, requests data on the current position of the vehicle 100 from the positioning unit 3, or, if no answer is received, extrapolates the current position of the vehicle on the basis of the geographic data stored previously. A second step comprises the comparison of the data on the geographic position of the vehicle 100 with corresponding data present in the geographic data base 10, which generates a string indicating the infrastructure-related position of the vehicle, for example the name of a city, district and street in the case of a land vehicle. The said string is supplied to the voice data base 11, which in turn generates a digital audio signal for the said street position. The said digital voice signal is amplified if necessary by the amplifier 14 and superimposed on the emergency call by the mixing unit 18, which temporarily attenuates or suppresses the audio signal from the microphones 4 in favour of the synthesized voice which communicates both the identity and the infrastructure-related position of the vehicle 100, together with the type of alarm, if appropriate.

The subroutine S8 is of the repeated type and is controlled by a software timer which determines the frequency of communication of the position of the vehicle 100 during the emergency call. In the meantime, the main program returns to the standby mode to await new incoming signals.

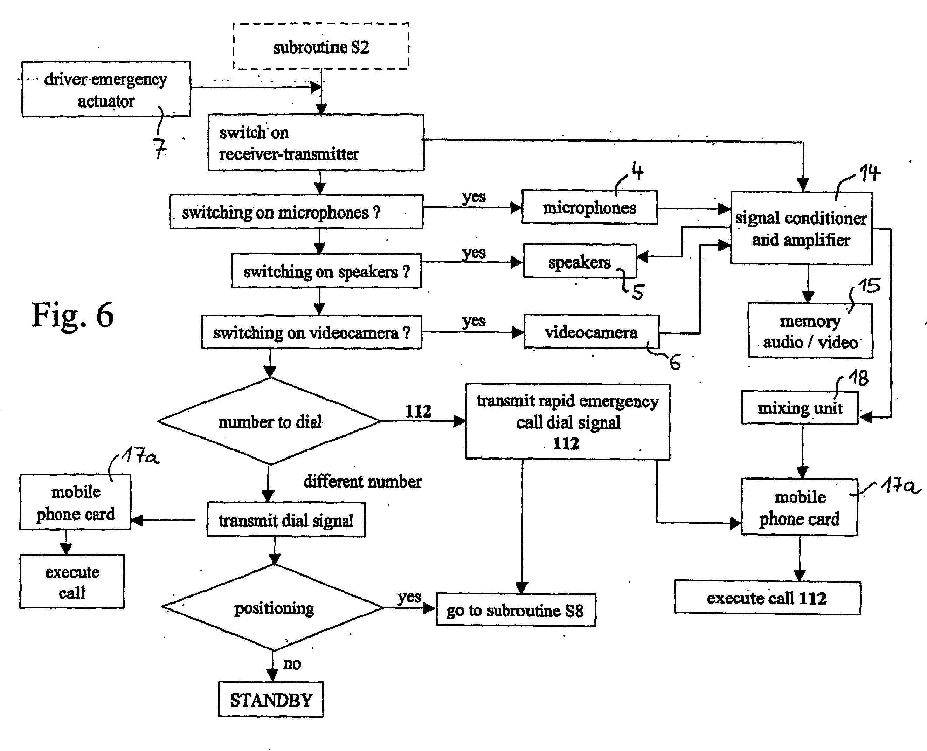

If the control unit 2 receives at its input a signal from the driver's emergency button 7, the said control unit 2 executes a subroutine S2, as shown schematically in Figure 6.

The steps of the procedure of the subroutine S2 comprise the turning on of a transceiver 4, 5 inside the driver's compartment 101 of the vehicle and, if requested by the driver, the turning on of further microphones 4 and loudspeakers 5, and of the video cameras 6 inside the vehicle 100, and particularly inside the passenger compartment 102. The control unit 2 identifies the telephone number requested by the driver, according to the key pressed by him. In the case of the public emergency telephone number, which in Europe will be 112 or another supported number, the emergency call signal is dialled and sent by the control unit 2 to the mobile telephone card 17a, which in turn establishes the telephone call to the police via the antenna 17b. While the control unit 2 executes the subroutine S8, as described previously, the transmission to the police of acoustic signals arriving from the transceiver 4, 5 and possibly from other on-board microphones 4 commences, together with the storing of the audio and video environment inside the vehicle 100 in the audio/video memory 15. The telephone call is bidirectional. The driver can receive instructions from the police and the loudspeakers 5 can emit acoustic signals inside the vehicle 100 and particularly inside the passenger compartment 102.

If the call requested by the driver is not an emergency call, in other words if a key other than the driver's emergency key 7 has been pressed, the control unit 2 establishes a telephone call having lower priority than the emergency call, but still having the option of simultaneous communication of the infrastructure-related position of the vehicle 100.

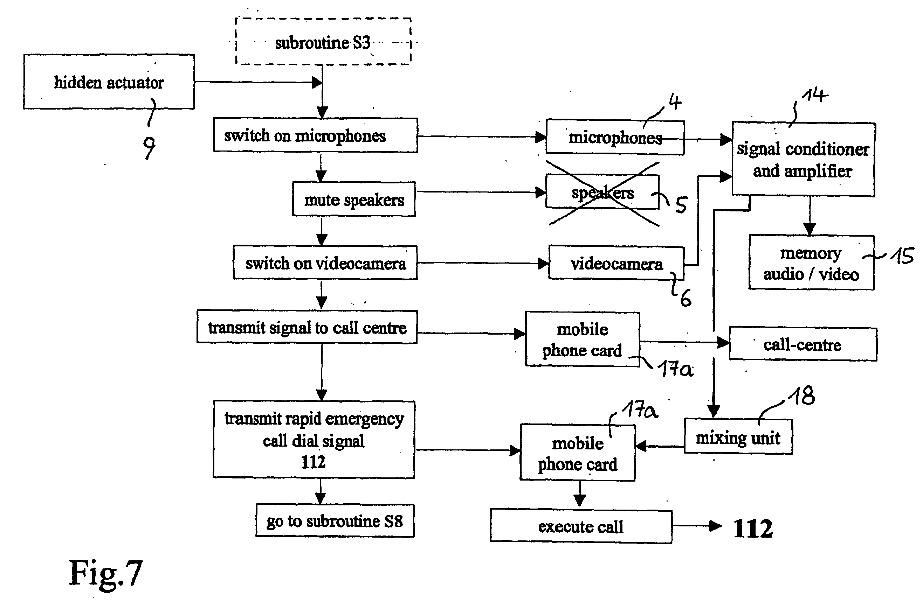

If the control unit 2 receives at its input a signal arriving from the hidden actuator 9, the said control unit 2 executes a subroutine S3, as shown schematically in Figure 7.

The steps of the procedure of the subroutine S3 comprise the turning on of the microphones 4 and the video cameras 6 inside the vehicle 100 and particularly inside the passenger compartment 102, together with the disabling of the loudspeakers 5 by the muting unit 16. The control unit 2 then sends a predetermined signal capable of generating an emergency message, of the SMS type for example, to the mobile telephone card 17a. The said emergency message is sent via the antenna 17b to an operations centre of the vehicle operator or to any dedicated call centre. The said control unit 2 then generates an emergency call signal, which in Europe is 112 or another supported number, and sends it to the mobile telephone card 17a, which in turn establishes the telephone call to the police via the antenna 17b. While the control unit 2 executes the subroutine S8, as described previously, the transmission to the police of the acoustic signals from the microphones 4 commences, together with the storage of the audio and video environment inside the vehicle 100 in the audio/video memory 15. The call established in this way from the interior of the vehicle 100 to the police is of the unidirectional type, since the disabling of the loudspeakers 5 by the muting unit 16 does not permit the emission of acoustic signals inside the vehicle. The call to the police remains concealed.

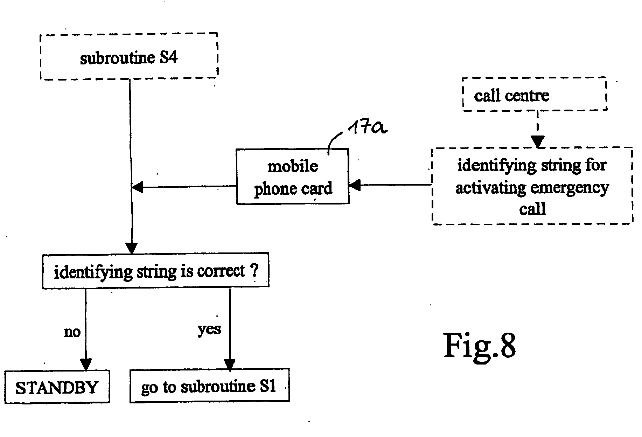

If the control unit 2 receives at its input a signal arriving from the communication system 17 and comprising an identifying data string for an external command to execute the emergency procedures, the said control unit 2 executes a subroutine S4, as shown schematically in Figure 8.

The steps of the procedure of the subroutine S4 comprise a check of the correctness of the identifying data string, together with the execution of the subroutine S1 as described above. Thus it is possible to make an emergency call and detect the infrastructure-related position of the vehicle 100 from the outside, for example in case of theft or deviation of a vehicle.

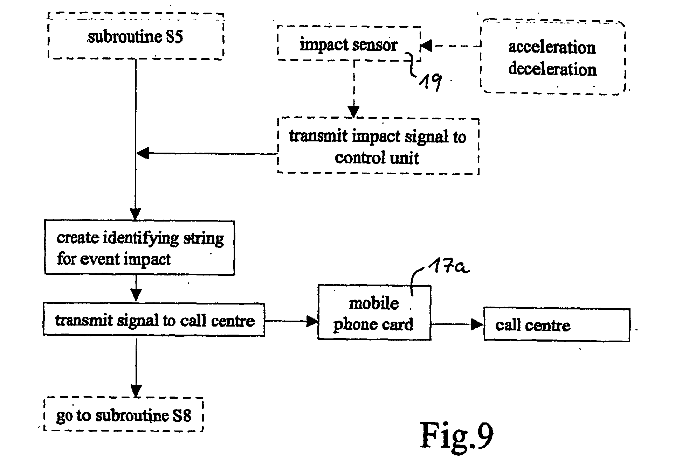

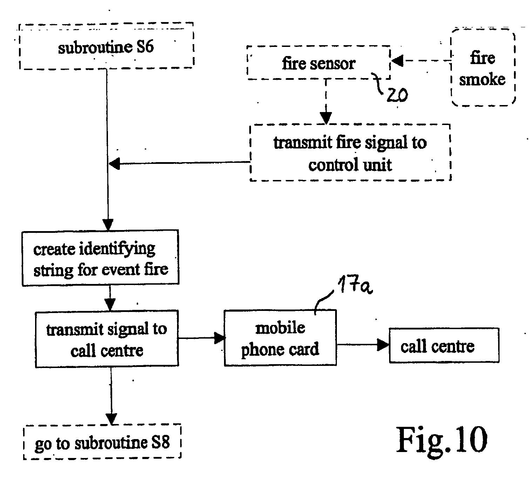

One embodiment of the invention also provides for the automatic transmission of identification signals, possibly by voice synthesis, for the events of impact and/or fire, as shown schematically in Figures 9 and 10.

In case of anomalous accelerations or decelerations of the vehicle 100, such as those occurring during a road accident, the impact sensor 19 sends a signal to the control unit 2.

Executing a subroutine S5, the control unit 2 sends to the mobile telephone card 17a a predetermined signal which can generate an emergency message, of the SMS type for example. The said emergency message is sent via the antenna 17b to an operation centre of- the vehicle operator or of any dedicated call centre, and can contain data strings relating to the current infrastructure-related position of the vehicle, in addition to the vehicle identification.

In the case of excessively high temperatures and in the presence of smoke inside the vehicle 100, as occurs for example during a fire, the fire sensor 20 sends a corresponding signal to the control unit 2. The said control unit 2, executing a subroutine S6, sends to the mobile telephone card 17a a predetermined signal which can generate an emergency message, of the SMS type for example. The said emergency message is sent via the antenna 17b to an operation centre of the vehicle operator or to any dedicated call centre, and can contain data strings relating to the current infrastructure-related position of the vehicle, in addition to the vehicle identification.

The emergency location and warning device 1 for means of transport according to the invention has numerous advantages.

This is because it enables the essential data for rapid intervention in case of emergency to be communicated to the police in an unusually short time. The device 1 according to the invention is also highly versatile and, because of its 4 main operating modes, adapts itself perfectly to any kind of emergency which may occur inside a vehicle.

The device 1 permits active intervention by the passengers and also by the driver, in an open or concealed way, and therefore without exposure to further risks or threats, for the purpose of averting an emergency situation. The device 1 according to the invention is therefore particularly suitable for use in public transport vehicles.

A further advantage of the device 1 according to the invention is related to the fact that the transmission mode used, in other words the combination of mobile telephony and the unique European emergency number (112 or other supported number); is extremely reliable, available throughout the territory of Europe and independent of the individual mobile telephone operator.

For example, the connection between the control unit 2 and the peripheral structural units of the device 1 can be formed not only by means of electrical or optical cables, but also by means of infrared or low-frequency radio waves.

The emergency warning actuating buttons 7, 8 and 9 can be replaced by pedals or levers.

In the example described above, the transmission channel is a telephone link, since the official protocols for emergency warnings in Europe specify telephone communication (Single European emergency call number 112 or other supported number). This can be different in other territories, and the communication system 17 will naturally be adapted to the current regulations for the territory in which the vehicle 100 operates. One alternative to mobile telephone connection would be, for example, a radio link.

According to one embodiment of the invention, the conversion of the signals relating to the geographic position of the vehicle 100 into voice signals is carried out by means of a phoneme data base 11.

In a further embodiment of the present invention, the geographic data base 10 and voice data base 11 can be configured directly via the communication channel used by the device 1.

In yet another embodiment of the invention, images obtained from the image acquisition unit 6 on board the vehicle 100 can also be transmitted to the police, by means of the GPRS (General Packet Radio Service) for example, in each of the four transmission modes.

As an alternative to the operation described above, the old data can be stored in suitable files after the updating of the data relating to the position of the vehicle 100, instead of being cancelled.

Clearly, a person skilled in the art can, in order to meet contingent and specific requirements, modify and vary the emergency location and warning device 1 for means of transport according to the invention in numerous ways, all of which fall within the scope of protection of the invention as defined by the following claims.

## Claims

1. An emergency location and warning device (1), which can be mounted on board a vehicle (100) with a driver's compartment (101) and a passenger compartment (102), and comprising:
- audio acquisition means (4), capable of acquiring acoustic signals in the interior (101, 102) of the said vehicle (100),
- audio emission means (5), capable of emitting acoustic signals in the interior (101, 102) of the said vehicle (100),
- a control unit (2),
- means (7, 8, 9) for actuating an emergency warning, connected to the said control unit (2), and
- geographic location means (3, 3a, 3b), for providing geographic data of the vehicle position, connected to the said control unit (2, 2a, 2b), **characterised in that** the emergency location and warning device further comprises
- means (10, 11) for converting said geographic data to digital voice data relating to the current infrastructure related position of the vehicle, the said conversion means (10, 11) being connected to the said control unit (2),
- communication means (17, 17a, 17b) actuatable by the control unit (2), which can automatically transmit to the police digital voice data relating to the identity of the vehicle (100) and said voice data relating to the current infrastructure-related position of the vehicle (100) together with the acoustic signals of the interior (101, 102) of the vehicle, acquired by the said audio acquisition means (4), via the public emergency communication channel.

2. Device (1) according to Claim 1, comprising an audio signal mixing unit (18), which can reduce the amplitude of the audio signal from the said audio acquisition means (4), during the transmission of the voice signals relating to the identity and infrastructure-related position of the vehicle (100).

3. Device (1) according to one of Claims 1 or 2, comprising muting means (16) associated with the said audio emission means (5) and connected to the said control unit (2), in which the said muting means (16) are controlled by the control unit (2) and can mute and reactivate the said audio emission means (5).

4. Device (1) according to any one of the preceding claims, in which the said means for actuating (7, 8, 9) of an emergency warning comprise public means for actuation (8), positioned visibly in the said passenger compartment (102) of the vehicle.

5. Device (1) according to any one of the preceding claims, in which the said means for actuating (7, 8, 9) of an emergency warning comprise driver's means for actuation (7), positioned visibly in the said driver's compartment (101) of the vehicle.

6. Device (1) according to any one of the preceding claims, in which the said means for actuating (7, 8, 9) of an emergency warning comprise hidden means for actuation (9) placed in a hidden position inside the vehicle (100).

7. Device (1) according to Claim 6, in which the said hidden means for actuation (9) are placed in a hidden position in the said driver's compartment (101).

8. Device (1) according to Claim 4, in which the said public means for actuation (8) comprise one or more buttons.

9. Device (1) according to Claim 6, in which the said hidden means for actuation (9) comprise one or more buttons.

10. Device (1) according to Claim 6, in which the said hidden means for actuation (9) comprise one or more pedals.

11. Device (1) according to Claim 5, in which the said driver's means for actuation (7) comprise keys.

12. Device (1) according to Claim 1, in which the said audio acquisition means (4) comprise one or more microphones (4) and the said audio emission means (5) comprise one or more loudspeakers (5).

13. Device (1) according to Claim 1, in which the said geographic location means (3) comprise a receiver (3a) of the satellite Global Positioning System.

14. Device (1) according to any one of the preceding claims, in which the said data converting means (10, 11) comprise a program (10, 11) which converts said digital geographic data into strings of infrastructure data, and which converts said strings of infrastructure data to said digital voice data and which converts alphanumeric identification data of the vehicle (100) to digital voice data.

15. Device (1) according to Claim 14, in which the said program (10, 11) is provided on a CD-Rom.

16. Device (1) according to Claim 14 or 15, in which said program (10, 11) can be loaded into a backing store.

17. Device (1) according to Claim 16, in which the said program (10, 11) can convert digital geographic data, such as altitude, latitude and longitude, to digital voice data, such as infrastructure-related positions.

18. Device (1) according to one of Claims 14 to 17, in which the said program (10, 11) can be configured via the said communication channel.

19. Device (1) according to any one of the preceding claims, in which the said control unit (2) comprises a logic microprocessor (2a), digital control programs, a backing store (2b) and a working memory (2c).

20. Device (1) according to any one of the preceding claims, in which the said communication means (17) comprise an adapter (17b) for the public emergency communication channel, associated with a mobile telephone card (17a).

21. Device (1) according to Claim 20, in which the said adapter (17b) for the public emergency communication channel comprises a mobile telephone antenna.

22. Device (1) according to any one of the preceding claims, comprising image acquisition means (6), which can acquire optical images of the interior (101, 102) of the vehicle (100), the said image acquisition means (6) being connected to the control unit (2).

23. Device (1) according to claim 22, comprising an audio and video memory (15), which can store audio signals from the audio acquisition means (4) and video signals from the said image acquisition means (6).

24. Device (1) according to any one of the preceding claims, comprising a user interface (13) with a keyboard and visual display, the said user interface (13) being positioned in the driver's compartment (101) of the vehicle (100) and in communication with the said control unit (2).

25. Device (1) according to Claim 24, in which the said user interface (13) comprises a transceiver (4, 5).

26. Device (1) according to any one of the preceding claims, comprising a battery pack (12) with a battery charger, independent of the batteries of the vehicle (100).

27. Emergency location and warning method for vehicles (100) with a driver's compartment (101) and a passenger compartment (102), comprising the following steps:
- determining the geographic position of the vehicle (100) and providing geographic data of the vehicle position;
- acquiring acoustic data relating to the audio environment in the interior (101, 102) of the vehicle (100);
- establishing a direct communication link between the said vehicle (100) and the police, **characterised by** the steps of
- converting said geographic data to strings of infrastructure data relating to the vehicle position;
- converting said strings of infrastructure data to digital voice data by means of voice synthesis; and
- transmitting to the police voice data relating to the identity of the vehicle (100) and said voice data relating to the current infrastructure-related position of the vehicle (100) together with the acoustic data relating to the audio environment in the interior (101, 102) of the vehicle (100) via the public emergency communication channel.

28. Method according to Claim 27, comprising the step of transmitting audio signals sent by the police to the interior (101, 102) of the vehicle (100).

29. Method according to Claim 27 or 28, comprising the step of reducing the intensity of the said acoustic data relative to the acoustic environment in the interior (101, 102) of the vehicle (100), during the transmission of the said voice data relating to the identity and to the current infrastructure-related position of the vehicle (100).

30. Method according to one of Claims 27 to 29, comprising the step of activating the transmission of audio signals to the interior (101, 102) of the vehicle (100).

31. Method according to one of Claims 27 to 30, comprising the step of muting the transmission of audio signals to the interior (101, 102) of the vehicle (100).

32. Method according to one of Claims 27 to 31, comprising the step of acquiring video images of the interior of the vehicle (100).

33. Method according to one of Claims 27 to 32, comprising the step of storing audio signals of the audio environment of the interior of the vehicle (100).

34. Method according to Claim 32 or Claim 33 when dependent from claim 32, comprising the step of storing video signals of the video images of the interior of the vehicle (100).

35. Method according to one of Claims 27 to 34, comprising the step of sending a message to an operations centre or dedicated call centre.

36. Method according to Claim 35, in which the said message is a telephone message of the SMS type.

37. Method according to Claim 35, in which the said message comprises one or more packets of data.

38. Method according to Claim 32 or one of Claims 33 to 37, when dependent from claim 32, comprising the step of sending to the police video signals of the said video images of the interior of the vehicle (100).

39. Method according to Claim 32 or one of Claims 33 to 38 when dependent from claim 32, comprising the step of sending video signals of said video images of the interior of the vehicle (100) to an operations centre or dedicated call centre.

40. Method according to Claim 39, using the General Packet Radio Service technology for the transmission of the said video signals.

## Patentansprüche

1. Notfall-Lokalisierungs- und Warnvorrichtung (1), die an Bord eines Fahrzeugs (100) mit einer Fahrerkabine (101) und einer Fahrgastkabine (102) angebracht werden kann, und umfassend:
- Audioerfassungsmittel (4), fähig zum Erfassen von akustischen Signalen im Inneren (101, 102) des Fahrzeugs (100),
- Audioemissionsmittel (5), fähig zum Emittieren von akustischen Signalen im Inneren (101, 102) des Fahrzeugs (100),
- eine Steuerungseinheit (2).
- Mittel (7, 8, 9) zum Betätigen einer Notfallwarnung, verbunden mit der Steuerungseinheit (2), und
geographische Lokalisierungsmittel (3, 3a, 3b) zum Bereitstellen von geographischen Daten der Fahrzeugposition, verbunden mit der Steuerungseinheit (2, 2a, 2b), **dadurch gekennzeichnet, dass** die Notfall-Lokalisierungs- und Warnvorrichtung ferner umfasst:
- Mittel (10, 11) zum Umwandeln der geographischen Daten in digitale Sprachdaten zur derzeitigen infrastrukturbezogenen Position des Fahrzeugs, wobei das Umwandlungsmittel (10, 11) mit der Steuerungseinheit (2) verbunden ist,
- Kommunikationsmittel (17, 17a, 17b), die durch die Steuerungseinheit (2) betätigbar sind, die automatisch digitale Sprachdaten zur Identität des Fahrzeugs (100) und die Sprachdaten zur derzeitigen infrastrukturbezogenen Position des Fahrzeugs (100) zusammen mit den akustischen Signalen aus dem Inneren (101, 102) des Fahrzeugs, die durch die Audioerfassungsmittel (4) erfasst sind, über den öffentlichen Notfallkommunikationskanal an die Polizei übermitteln können.

2. Vorrichtung (1) nach Anspruch 1, umfassend eine Audiosignalmischeinheit (18), die die Amplitude des Audiosignals vom Audioerfassungsmittel (4) bei der Übertragung der Sprachsignale zur Identität und infrastrukturbezogenen Position des Fahrzeugs (100) reduzieren kann.

3. Vorrichtung (1) nach Anspruch 1 oder 2, umfassend Stummstellmittel (16), die dem Audioemissionsmittel (5) zugeordnet und mit der Steuerungseinheit (2) verbunden sind, in der die Stummstellmittel (16) von der Steuerungseinheit (2) gesteuert sind und die Audioemissionsmittel (5) stummstellen und erneut aktivieren können.

4. Vorrichtung (1) nach einem der vorhergehenden Ansprüche, bei der die Mittel (7, 8, 9) zum Betätigen einer Notfallwarnung öffentliche Betätigungsmittel (8) umfassen, die sichtbar in der Fahrgastkabine (102) des Fahrzeugs positioniert sind.

5. Vorrichtung (1) nach einem der vorhergehenden Ansprüche, bei der die Mittel (7, 8, 9) zum Betätigen einer Notfallwarnung Betätigungsmittel (7) des Fahrers umfassen, die sichtbar in der Fahrerkabine (101) des Fahrzeugs positioniert sind.

6. Vorrichtung (1) nach einem der vorhergehenden Ansprüche, bei der die Mittel (7, 8, 9) zum Betätigen einer Notfallwarnung verborgene Betätigungsmittel (9) umfassen, die an einer verborgenen Position im Fahrzeug (100) platziert sind.

7. Vorrichtung (1) nach Anspruch 6, bei der die verborgenen Betätigungsmittel (9) an einer verborgenen Position in der Fahrerkabine (101) platziert sind.

8. Vorrichtung (1) nach Anspruch 4, bei der die öffentlichen Betätigungsmittel (8) einen oder mehrere Knöpfe umfassen.

9. Vorrichtung (1) nach Anspruch 6, bei der die verborgenen Betätigungsmittel (9) einen oder mehrere Knöpfe umfassen.

10. Vorrichtung (1) nach Anspruch 6, bei der die verborgenen Betätigungsmittel (9) ein oder mehrere Pedale umfassen.

11. Vorrichtung (1) nach Anspruch 5, bei der die Betätigungsmittel (7) des Fahrers tasten umfassen.

12. Vorrichtung (1) nach Anspruch 1, bei der die Audioerfassungsmittel (4) ein oder mehrere Mikrophone (4) umfassen und die Audioemissionsmittel (5) einen oder mehrere Lautsprecher (5) umfassen.

13. Vorrichtung (1) nach Anspruch 1, bei der die geographischen Lokalisierungsmittel (3) einen Empfänger (3a) des globalen Positionierungssatellitensystems umfassen.

14. Vorrichtung (1) nach einem der vorhergehenden Ansprüche, bei der die Datenumwandlungsmittel (10, 11) ein Programm (10, 11) umfassen, das die digitalen geographischen Daten in Abfolgen von Infrastrukturdaten umwandelt, und das die Abfolgen von Infrastrukturdaten in digitale Sprachdaten umwandelt und das alphanumerische Identifikationsdaten des Fahrzeugs (100) in digitale Sprachdaten umwandelt.

15. Vorrichtung (1) nach Anspruch 14, bei der das Programm (10, 11) auf einer CD-ROM vorgesehen ist.

16. Vorrichtung (1) nach Anspruch 14 oder 15, bei der das Programm (10, 11) in einem Externspeicher geladen sein kann.

17. Vorrichtung (1) nach Anspruch 16, bei der das Programm (10, 11) digitale geographische Daten, wie Höhe, Breite und Länge in digitale Sprachdaten umwandeln kann, wie infrastrukturbezogene Positionen.

18. Vorrichtung (1) nach einem der Ansprüche 14 bis 17, bei der das Programm (10, 11) über den Kommunikationskanal konfiguriert werden kann.

19. Vorrichtung (1) nach einem der vorhergehenden Ansprüche, bei der die Steuerungseinheit (2) einen Logikmikroprozessor (2a), digitale Steuerungsprogramme, einen Externspeicher (2b) und einen Arbeitsspeicher (2c) umfasst.

20. Vorrichtung (1) nach einem der vorhergehenden Ansprüche, bei der die Kommunikationsmittel (17) einen Adapter (17b) für den öffentlichen Notfallkommunikationskanal umfassen, der einer Mobiltelephonkarte (17a) zugeordnet ist.

21. Vorrichtung (1) nach Anspruch 20, bei der der Adapter (17b) für den öffentlichen Notfallkommunikationskanal eine Mobiltelephonantenne umfasst.

22. Vorrichtung (1) nach einem der vorhergehenden Ansprüche, umfassend Bilderfassungsmittel (6), die optische Bilder des Inneren (101, 102) des Fahrzeugs (100) erfassen können, wobei die Bilderfassungsmittel (6) mit der Steuerungseinheit (2) verbunden sind.

23. Vorrichtung (1) nach Anspruch 22, umfassend einen Audio- und Videospeicher (15), der Audiosignale vom Audioerfassungsmittel (4) und Videosignale vom Bilderfassungsmittel (6) speichern kann.

24. Vorrichtung (1) nach einem der vorhergehenden Ansprüche, umfassend eine Benutzerschnittstelle (13) mit einer Tastatur und einer Sichtanzeige, wobei die Benutzerschnittstelle (13) in der Fahrerkabine (101) des Fahrzeugs (100) positioniert ist und mit der Steuerungseinheit (2) in Kommunikation steht.

25. Vorrichtung (1) nach Anspruch 24, bei der die Benutzerschnittstelle (13) einen Sende-Empfänger (4, 5) umfasst.

26. Vorrichtung (1) nach einem der vorhergehenden Ansprüche, umfassend einen Batteriepack (12) mit einem Batterieladegerät, unabhängig von den Batterien des Fahrzeugs (100).

27. Notfall-Lokalisierungs- und Warnverfahren für Fahrzeuge (100) mit einer Fahrerkabine (101) und einer Fahrgastkabine (102) umfassend die folgenden Schritte:
- Bestimmen der geographischen Position des Fahrzeugs (100) und Bereitstellen von geographischen Daten der Fahrzeugposition,
- Erfassen von akustischen Daten zur akustischen Umgebung im Inneren (101, 102) des Fahrzeugs (100),
- Herstellen einer direkten Kommunikationsverbindung zwischen dem Fahrzeug (100) und der Polizei, **gekennzeichnet durch** die Schritte
- Umwandeln der geographischen Daten in Abfolgen von Infrastrukturdaten zur Fahrzeugposition,
- Umwandeln der Abfolgen von Infrastrukturdaten in digitale Sprachdaten mittels einer Sprachsynthese, und
- Übertragen von Sprachdaten zur Identität des Fahrzeugs (100) und der Sprachdaten zur derzeitigen infrastrukturbezogenen Position des Fahrzeugs (100) zusammen mit den akustischen Daten der akustischen Umgebung im Inneren (101, 102) des Fahrzeugs (100) über den öffentlichen Notfallkommunikationskanal an die Polizei.

28. Verfahren nach Anspruch 27, umfassend den Schritt zum Übertragen von Audiosignalen, die von der Polizei gesendet wurden, ins Innere (101, 102) des Fahrzeugs (100).

29. Verfahren nach Anspruch 27 oder 28, umfassend den Schritt zum Reduzieren der Intensität der akustischen Daten zur akustischen Umgebung im Inneren (101, 102) des Fahrzeugs (100) bei der Übertragung der Sprachdaten zur ldentität und zur derzeitigen infrastrukturbezogenen Position des Fahrzeugs (100).

30. Verfahren nach einem der Ansprüche 27 bis 29, umfassend den Schritt zum Aktivieren der Übertragung von Audiosignalen zum Inneren (101, 102) des Fahrzeugs (100).

31. Verfahren nach einem der Ansprüche 27 bis 30, umfassend den Schritt zum Stummstellen der Übertragung von Audiosignalen zum Inneren (101, 102) des Fahrzeugs (100).

32. Verfahren nach einem der Ansprüche 27 bis 31, umfassend den Schritt zum Erfassen von Videobildern des Inneren des Fahrzeugs (100).

33. Verfahren nach einem der Ansprüche 27 bis 32, umfassend den Schritt zum Speichern von Audiosignalen der akustischen Umgebung des Inneren des Fahrzeugs (100).

34. Verfahren nach einem der Ansprüche 32 oder 33, wenn von Anspruch 32 abhängig, umfassend den Schritt zum Speichern von Videosignalen von Videobildern des Inneren des Fahrzeugs (100).

35. Verfahren nach einem der Ansprüche 27 bis 34, umfassend den Schritt zum Senden einer Mitteilung an ein Betriebszentrum oder eine zugehörige Telefonzentrale.

36. Verfahren nach Anspruch 35, bei dem die Mitteilung eine telefonische Mitteilung vom SMS-Typ ist.

37. Verfahren nach Anspruch 35, bei dem die Mitteilung ein oder mehrere Datenpakete umfasst.

38. Verfahren nach Anspruch 32 oder einem der Anspruche 33 bis 37, wenn von Anspruch 32 abhangig umfassend den Schritt zum Senden von Videosignalen der Videobilder des Inneren des Fahrzeugs (100) an die Polizei.

39. Verfahren nach, dem Anspruch 32 oder einem der Anspruche 33 bis 38, wenn von Anspruch 32 abhangig umfassend den Schritt zum Senden von Videosignalen der Videobilder des Inneren des Fahrzeugs (100) an ein Betriebszentrum oder eine zugehörige Telefonzentrale.

40. Verfahren nach Anspruch 39, das die Technologie des General Packet Radio Service für die Übertragung der Videosignale verwendet.

## Revendications

1. Dispositif (1) de localisation et d'avertissement d'urgence, qui peut être monté à bord d'un véhicule (100) comportant un compartiment (101) pour le conducteur et un compartiment (102) pour les passagers, et comprenant :
- des moyens d'acquisition audio (4) aptes à acquérir des signaux acoustiques dans l'espace intérieur (101,102) dudit véhicule (100),
- des moyens d'émission audio (5) aptes à émettre des signaux acoustiques dans l'espace intérieur (101,102) du véhicule (100),
- une unité de commande (2),
- des moyens (7,8,9) pour actionner un avertissement d'urgence, connectés à ladite unité de commande (2), et
- des moyens de localisation géographique (3,3a, 3b) pour fournir des données géographiques de la position du véhicule, connectés à ladite unité de commande (2,2a,2b),
**caractérisé en ce que** le dispositif de localisation et d'avertissement d'urgence comprend en outre
- des moyens (10,11) pour convertir lesdites données géographiques en des données vocales numériques concernant la position actuelle du véhicule, par rapport à l'infrastructure, lesdits moyens de conversion (10,11) étant connectés à ladite unité de commande (2),
- des moyens de communication (17,17a,17b) pouvant être actionnés par l'unité de commande (2), qui peuvent transmettre automatiquement à la police des données vocales numériques concernant l'identité du véhicule (100) et lesdites données vocales concernant la position actuelle, par rapport à l'infrastructure, du véhicule (100) conjointement avec les signaux acoustiques de l'espace intérieur (101,102) du véhicule, acquis par lesdits moyens d'acquisition audio (4) par l'intermédiaire du canal de communication d'urgence publique.

2. Dispositif (1) selon la revendication 1, comprenant une unité (18) de mélange de signaux audio, qui permet de réduire l'amplitude du signal audio délivré par lesdits moyens d'acquisition audio (4) pendant la transmission des signaux vocaux concernant l'identité et la position, par rapport à l'infrastructure, du véhicule (100).

3. Dispositif (1) selon l'une des revendications 1 ou 2, comprenant des moyens de mise en sommeil (16) associés auxdits moyens d'émission audio (5) et connectés à ladite unité de commande (2), lesdits moyens de mise en sommeil (16) étant commandés par l'unité de commande (2) et pouvant réaliser la mise en sommeil et la réactivation desdits moyens d'émission audio (5).

4. Dispositif (1) selon l'une quelconque des revendications précédentes, dans lequel lesdits moyens (7,8,9) pour actionner un avertissement d'urgence comprennent des moyens publics d'actionnement (8) positionnés de manière à être visibles dans le compartiment (102) pour les passagers du véhicule.

5. Dispositif (1) selon l'une quelconque des revendications précédentes, dans lequel lesdits moyens (7,8,9) pour actionner un avertissement d'urgence comprennent des moyens d'actionnement (7) du conducteur positionnés de manière à être visibles dans le compartiment (101) pour le conducteur du véhicule.

6. Dispositif (1) selon l'une quelconque des revendications précédentes, dans lequel lesdits moyens (7,8,9) d'actionnement d'un avertissement d'urgence comprennent des moyens cachés d'actionnement (9) disposés dans une position cachée à l'intérieur du véhicule (100).

7. Dispositif (1) selon la revendication 6, dans lequel lesdits moyens cachés d'actionnement (9) sont disposés dans une position masquée dans ledit compartiment (101) pour le conducteur.

8. Dispositif (1) selon la revendication 4, dans lequel lesdits moyens publics d'actionnement (8) comprennent un ou plusieurs boutons.

9. Dispositif (1) selon la revendication 6, dans lequel lesdits moyens cachés d'actionnement (9) comprennent un ou plusieurs boutons.

10. Dispositif (1) selon la revendication 6, dans lequel lesdits moyens cachés d'actionnement (9) comprennent une ou plusieurs pédales.

11. Dispositif (1) selon la revendication 5, dans lequel lesdits moyens d'actionnement (7) du conducteur comprennent des touches.

12. Dispositif (1) selon la revendication 1, dans lequel lesdits moyens d'acquisition audio (15) comprennent un ou plusieurs microphones (4) et lesdits moyens d'émission audio (5) comprennent un ou plusieurs haut-parleurs (5).

13. Dispositif (1) selon la revendication 1, dans lequel lesdits moyens de localisation géographique (3) comprennent un récepteur (3a) du système de positionnement global par satellite.

14. Dispositif (1) selon l'une quelconque des revendications précédentes, dans lequel lesdits moyens pour convertir des données (10,11) comprennent un programme (10,11), qui convertit lesdites données géographiques numériques en des chaînes de données d'infrastructure et qui convertit lesdites chaînes de données d'infrastructure en lesdites données vocales numériques et qui convertit des données d'identification alphanumériques du véhicule (100) en des données vocales numériques.

15. Dispositif (1) selon la revendication 14, dans lequel ledit programme (10,11) est prévu dans une mémoire CD-Rom.

16. Dispositif (1) selon la revendication 14 ou 15, dans lequel ledit programme (10,11) peut être chargé dans une mémoire auxiliaire.

17. Dispositif (1) selon la revendication 16, dans lequel ledit programme (10,11) peut convertir des données géographiques numériques, telles qu'une altitude, une latitude et une longitude, en des données vocales numériques, comme par exemple des positions par rapport à l'infrastructure.

18. Dispositif (1) selon l'une des revendications 14 à 17, dans lequel ledit programme (10,11) peut être configuré au moyen dudit canal de communication.

19. Dispositif (1) selon l'une quelconque des revendications précédentes, dans lequel ladite unité de commande (2) comprend un microprocesseur logique (2a), des programmes de commande numérique, une mémoire auxiliaire (2b) et une mémoire de travail (2c).

20. Dispositif (1) selon l'une quelconque des revendications précédentes, dans lequel lesdits moyens de communication (17) comprennent un adaptateur (17b) pour le canal de communication d'urgence publique, associé à une carte de téléphone mobile (17a).

21. Dispositif (1) selon la revendication 20, dans lequel ledit adaptateur (17b) pour le canal de communication d'urgence publique comprend une antenne de téléphone mobile.

22. Dispositif (1) selon l'une quelconque des revendications précédentes, comprenant des moyens d'acquisition d'images (6), qui peuvent acquérir des images optiques de l'intérieur (101,102) du véhicule (100), lesdits moyens d'acquisition d'images (6) étant connectés à l'unité de commande (2).

23. Dispositif (1) selon la revendication 22, comprenant une mémoire audio et vidéo (15), qui peut mémoriser des signaux audio provenant des moyens d'acquisition audio (4) et des signaux vidéo provenant desdits moyens d'acquisition d'images (6).

24. Dispositif (1) selon l'une quelconque des revendications précédentes, comprenant une interface d'utilisateur (13) comportant un clavier et un dispositif d'affichage visuel, ladite interface d'utilisateur (13) étant positionnée dans le compartiment (101) pour le conducteur du véhicule (100) et étant en communication avec ladite unité de commande (2).

25. Dispositif (1) selon la revendication 24, dans lequel ladite interface dudit utilisateur (13) comprend un émetteur-récepteur (4,5).

26. Dispositif (1) selon l'une quelconque des revendications précédentes, comprenant un bloc de batterie (12) comportant un chargeur de batterie, indépendant des batteries du véhicule (100).

27. Procédé de localisation et d'avertissement d'urgence pour des véhicules (100) comportant un compartiment (101) pour le conducteur et un compartiment (102) pour les passagers, comprenant les étapes suivantes consistant à :
- déterminer la position géographique du véhicule (100) et délivrer des données géographiques de la position du véhicule;
- acquérir des données acoustiques concernant l'environnement audio dans l'espace intérieur (101,102) du véhicule (100);
- établir une liaison de communication directe entre ledit véhicule (100) et la police,
**caractérisé par** les étapes consistant à
- convertir lesdites données géographiques en des suites de données d'infrastructure concernant la position du véhicule;
- convertir lesdites chaînes de données d'infrastructure en des données vocales numériques au moyen d'une synthèse vocale; et
- transmettre à la police des données vocales concernant l'identité du véhicule (100) et lesdites données vocales concernant la position actuelle par rapport à l'infrastructure du véhicule (100) conjointement avec les données acoustiques concernant l'environnement audio dans l'espace intérieur (101,102) du véhicule (100) par l'intermédiaire du canal de communication d'urgence publique.

28. Procédé selon la revendication 27, comprenant l'étape consistant à transmettre des signaux audio envoyés par la police à l'espace intérieur (101,102) du véhicule (100).

29. Procédé selon la revendication 27 ou 28, comprenant l'étape consistant à réduire l'intensité desdites données acoustiques concernant l'environnement acoustique dans l'espace intérieur (101,102) du véhicule (100), pendant la transmission desdites données vocales concernant l'identité et la position actuelle, par rapport à l'infrastructure, du véhicule (100).

30. Procédé selon l'une des revendications 27 à 29, comprenant l'étape consistant à activer la transmission de signaux audio vers l'espace intérieur (101,102) du véhicule (100).

31. Procédé selon l'une des revendications 27 à 30, comprenant l'étape consistant à mettre en sommeil la transmission de signaux audio en direction de l'espace intérieur (101,102) du véhicule (100).

32. Procédé selon l'une des revendications 27 à 31 comprenant l'étape consistant à acquérir des images vidéo de l'espace intérieur du véhicule (100).

33. Procédé selon l'une des revendications 27 à 32, comprenant l'étape consistant à mémoriser des signaux audio de l'environnement audio de l'espace intérieur du véhicule (100).

34. Procédé selon la revendication 32 ou la revendication 33 lorsqu'elle dépend de la revendication 32, comprenant l'étape consistant à mémoriser des signaux vidéo des images vidéo de l'intérieur du véhicule (100).

35. Procédé selon l'une des revendications 27 à 34, comprenant les étapes consistant à émettre un message en direction d'un centre d'opérations ou d'un centre d'appel dédié.

36. Procédé selon la revendication 35, selon lequel ledit message est un message téléphonique du type SMS.

37. Procédé selon la revendication 35, selon lequel ledit message comprend un ou plusieurs paquets de données.

38. Procédé selon la revendication 32 ou l'une des revendications 33 à 37 lorsqu'elles dépendent de la revendication 32, comprenant l'étape consistant à envoyer à la police des signaux vidéo desdites images vidéo de l'espace intérieur du véhicule (100).

39. Procédé selon la revendication 32 ou les revendications 33 à 38 lorsqu'elles dépendent de la revendication 32, comprenant l'étape consistant à envoyer des signaux vidéo desdites images vidéo de l'espace intérieur du véhicule (100) à un centre d'opérations ou à un centre d'appel dédié.

40. Procédé selon la revendication 39, utilisant la technologie du service général de radiocommunication en mode paquet pour la transmission desdits signaux vidéo.
